(19) 

Europäisches
Patentamt
European
Patent Office
Office européen
des brevets

(11) **EP 2 028 241 A1**

(12) **EUROPEAN PATENT APPLICATION**

(43) Date of publication:
**25.02.2009 Bulletin 2009/09**

(51) Int Cl.:
***C09D 11/00*** *(2006.01)*

(21) Application number: **08162076.7**

(22) Date of filing: **08.08.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **09.08.2007 JP 2007208640
09.08.2007 JP 2007208561
29.10.2007 JP 2007280875
15.07.2008 JP 2008183809**

(71) Applicant: **Seiko Epson Corporation
Tokyo 163-0811 (JP)**

(72) Inventors:
• **Nakano, Keitaro
Suwa-shi
Nagano-ken 392-8502 (JP)**
• **Oyanagi, Takashi
Suwa-shi
Nagano-ken 392-8502 (JP)**
• **Fukumoto, Hiroshi
Suwa-shi
Nagano-ken 392-8502 (JP)**

(74) Representative: **HOFFMANN EITLE
Patent- und Rechtsanwälte
Arabellastrasse 4
81925 München (DE)**

(54) **Photocurable ink composition, ink cartridge, inkjet recording method and recorded matter**

(57) A photocurable ink composition includes a photoradical polymerization initiator, a compound having an active hydrogen-bearing functional group, and a hindered amine.

EP 2 028 241 A1

**EP 2 028 241 A1**

**Description**

BACKGROUND

1. Technical Field

The present invention relates to photocurable ink compositions. More specifically, the invention relates to photocurable ink compositions having excellent storage stability and curability, photocurable ink compositions which have a good storage stability, an improved curing sensitivity and polymerization rate and resist the effects of oxygen inhibition, and enables sufficient curing treatment to be carried out by exposure to light. The invention further relates to an ink cartridge, an ink jet recording method and recorded matter which use such photocurable ink compositions.

2. Related Art

Various ink compositions which have excellent properties such as storage stability and are curable by exposure to active energy rays have hitherto been developed.
For example, JP-A-2006-241194, the stated object of which is to provide ink compositions that have an excellent finely divided pigment dispersibility and stability, have a high tinting strength and are capable of forming high-resolution images having sharp colors, have an excellent storage stability and dischargeability, and have a good curability on exposure to active energy rays, proposes an ink composition composed of (a) a polymerizable compound, (b) a pigment, (c) a polymer having at least a nitrogen-containing heterocycle, and (d) a polymerization initiator. This patent publication discloses an ink composition containing a polymer (dispersant and polymerization inhibitor) in which a hindered amine (HALS) has been introduced. Examples of radical polymerization systems and cationic polymerization systems are both cited therein.
However, when a radical polymerization system and a cationic polymerization system are both used, the mechanism for inhibiting polymerization becomes a challenge. Radical polymerizable UV-curable inks undergo a rise in viscosity during storage due to the radicals generated in dark reactions.
Thermal polymerization inhibitors are added to suppress this effect, but because hydroquinone-type thermal polymerization inhibitors are consumed in the course of radical inactivation, they do not remain effective. Likewise, hindered amine systems, unless they pass through an oxidation-reduction cycle, are consumed in the same way as hydroquinone systems, as a result of which they do not remain effective. If the thermal polymerization inhibitor is added in a large excess, the storage stability improves, but because radicals are inactivated even during the photocuring reaction, the curability inevitably declines.
This patent publication lists examples of the hydroquinone compounds and hindered amine compounds, and does mention that the storage stability is held in check by the polymerization inhibiting ability of the nitrogen-containing heterocycle. However, no mention is made therein of the technical debate concerning the decline in curability in radical reactions like that described above.
In addition, photocurable ink compositions which use an ene-thiol reaction or a (meth)acrylate reaction have previously been disclosed. Ene-thiol reactions are, like (meth)acrylate reactions, radical polymerization reactions. These differ as follows: in a (meth)acrylate reaction, a radical (I·) generated from a photoradical initiator (I) by ultraviolet light (UV) irradiation reacts with (meth)acrylate, leading to polymerization, whereas in an ene-thiol reaction, a radical generated from a photoradical initiator by UV irradiation removes the hydrogen from thiol (R-SH), generating a thiyl radical (R-S·), and the generated thiiyl radical reacts with ene, thereby polymerizing.
Various photocurable ink compositions which utilize the ene-thiol reaction have recently been developed. For example, JP-A-2003-342499, the object of which is to provide an inkjet ink that has excellent dischargeability from inkjet heads and is capable of being cured by low-energy active light, discloses an active light-curable inkjet ink composition which contains a polyene compound and a polythiol compound.
JP-A-2004-9360, the object of which is to provide an inkjet recording method characterized by an excellent dischargeability from the inkjet head, curability with low-energy active-energy rays and a good image finishing quality, discloses an active light-curable inkjet recording method which discharges to a printing medium an ink that is active light-curable, then irradiates the ink with active light, wherein the ink contains a polymerizable acrylate unsaturated compound and an oxygen sensitizer.
However, in the photocurable ink compositions mentioned in the foregoing patent publication, the polymerization reactions consist entirely of ene-thiol reactions, as a result of which the polymerization rate is too slow to be practical. In addition, these reactions are known to give rise to dark reactions; as a result, there is a strong tendency for the ink to gel, giving it a poor storage stability. Moreover, in photocurable ink compositions which use a radical polymerization system, polymerization is generally inhibited by oxygen within the air. One conceivable way to keep this from happening is to add a conventional amine compound. However, when this is done, the amine compound changes, causing yellow discoloration of the cured film. As a result, a desire exists for photocurable ink compositions which have an excellent curing sensitivity and a high polymerization rate, yet are not affected by oxygen inhibition and do not result in yellowing of the cured film.

Hence, there has yet to be achieved in the art a photocurable ink composition which has a rapid reaction rate, is resistant to oxygen inhibition, and can be fully cured.

SUMMARY

In accordance with an aspect of the present invention, there is provided a photocurable ink composition having an excellent storage stability and curability. Accordingly, in accordance with the aspect of the invention, there is provided a photocurable ink composition which has a rapid reaction rate, resists the influence of oxygen inhibition and can be fully cured by irradiation with light, and which moreover has a good storage stability and an improved curing sensitivity and polymerization rate.

As noted above, ene-thiol reactions, under conditions free of the influence of oxygen inhibition, have a lower reactivity than (meth)acrylate reactions (slower curing rate). The reasons are as follows. In a (meth)acrylate reaction, the reaction of a radical with an ene cleaves the ene, generating a carbon radical. The carbon radical reacts with another ene, resulting in polymerization by a chain reaction. By contrast, in an ene-thiol reaction, although a carbon radical is generated as in the (meth)acrylate reaction, there are two types of reactions: those in which the carbon radical reacts with another ene, resulting in polymerization by a chain reaction, and those in which the carbon radical reacts with the thiol compound, generating a new thiyl radical. As a result, convergence to polymerization does not occur, leading to a decline in the reaction rate.

Under conditions where there is an influence by oxygen inhibition, the following reactions arise.
In the (meth)acrylate reaction, the generated carbon radical reacts with oxygen in the atmosphere, generating a peroxy radical (ROO·), whereupon the reaction stops. This makes the (meth)acrylate reaction readily susceptible to the influence of oxygen inhibition.
In the ene-thiol reaction, as in the (meth)acrylate reaction, a peroxy radical is generated. However, because this radical reacts with the thiol compound, generating a new thiyl radical, the reaction continues. Hence, the ene-thiol reaction is resistant to the influence of oxygen inhibition.
That is, there can be provided an ink composition which, by concurrently generating both a (meth)acrylate reaction system and a thiol reaction system, increases the overall reaction rate and is moreover resistant to the influence of oxygen inhibition.

In addition, the inventors have conducted extensive investigations, as a result of which they have found that when a hindered amine compound and a thiol compound having an active hydrogen are used together, because both an oxidation-reduction (redox) cycle and a chain transfer reaction proceed, the ink composition does not incur the effects of oxygen inhibition.
The inventors have also learned that by having the constituent substances in the ink composition be rich in active oxygen, redox cycles readily proceed, enabling the above objects to be achieved.

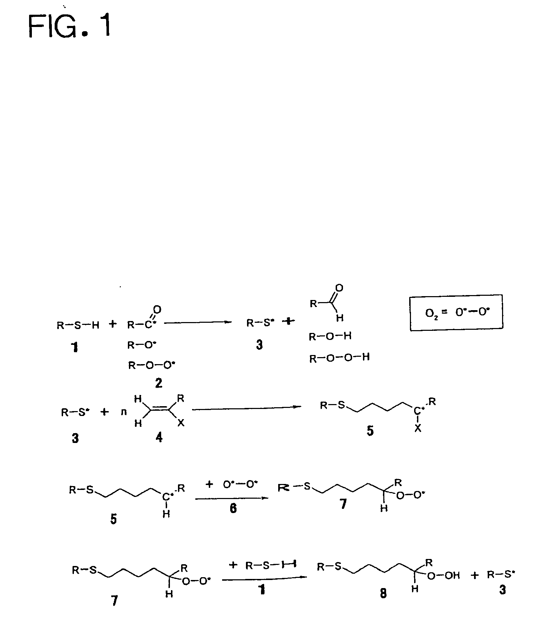

The effects can be specifically explained in terms of redox cycles such as those shown in Figs. 1, 2 and 3. First, in Fig. 1, a thiyl radical (3) is generated by a thiol (1) having an active hydrogen and any of various radicals (2) derived from initiators. The generated thiyl radical (3) reacts with an unsaturated double bond compound (4), forming a carbon radical (5). When the carbon radical (5) reacts with oxygen (6) (incurs oxygen inhibition), it becomes a peroxy radical (7), at which point the radical polymerization reaction stops and further reaction does not take place.
However, if a thiol (1) is present, it reacts with (7) to generate a thiyl radical (3), as a result of which a radical reaction with (4) proceeds.

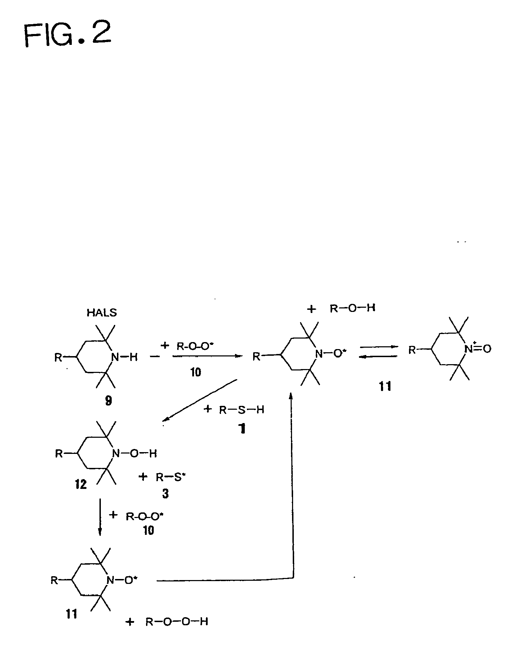

Fig. 2 depicts a hindered amine compound reaction cycle. A peroxy radical (10) which stops the reaction as a result of oxygen inhibition reacts with a hindered amine (9) to form a nitro radical (11). The nitro radical (11) reacts with a thiol (1), becoming an oxime (12), in addition to which it reacts with a peroxy radical (10), reverting again to a nitro radical (11). Because a thiyl radical (3) is generated at the same time, the radical reaction proceeds.

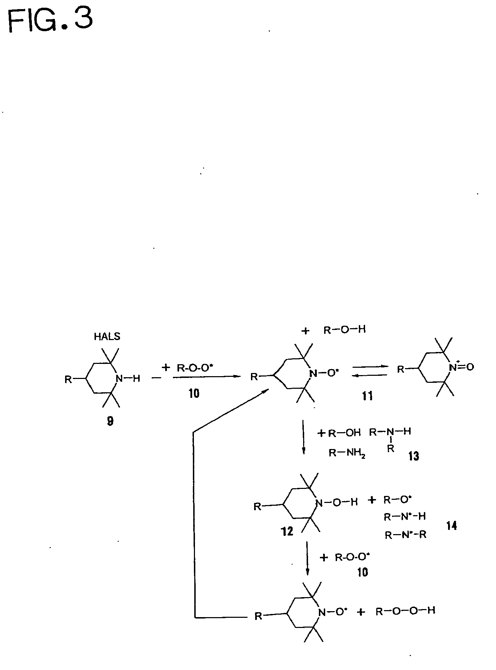

Fig. 3 serves to illustrate the enrichment of the active hydrogen compound within the reaction system. A hindered amine compound (9) and a peroxy radical (10) react to form a nitro radical (11), which then reacts with active hydrogen-bearing compounds (13), generating radicals (14) from the active hydrogen compounds, which radicals subsequently undergo a polymerization reaction.

As explained above, it is thought that, by combining the constituent compounds of the invention, a radical polymerization reaction can be made to proceed without incurring the influence of oxygen inhibition.

An aspect of the present invention, which was arrived at based on the above findings, achieves the above-mentioned objects by providing the following ink compositions.
(1) A photocurable ink composition comprising at least a photoradical polymerization initiator, a compound having an active hydrogen-bearing functional group, and a hindered amine.

(2) The photocurable ink composition according to (1) above, wherein the active hydrogen-bearing functional group is selected from among thiol, amino, imino and alcoholic hydroxyl groups.

(3) The photocurable ink composition according to (2) above, wherein the compound having an active hydrogen-bearing functional group is a thiol group-containing chain transfer agent.

(4) The photocurable ink composition according to (3) above, including 0.2 to 5 wt % of the thiol group-containing chain transfer agent.

(5) The photocurable ink composition according to (1) or (2) above, wherein the compound having an active hydrogen-bearing functional group is a polymerizable compound which further includes an unsaturated double bond.

(6) The photocurable ink composition according to (5) above, wherein the polymerizable compound which includes an unsaturated double bond is a compound selected from among compounds having an acrylic group or a methacrylic group and polymerizable compounds having a vinyl group or an allyl group.

(7) The photocurable ink composition according to (6) above, wherein the polymerizable compound which includes an unsaturated double bond is at least one selected from among N-vinyl compounds, vinyl ethers, allyl glycols and trimethylolpropane allyl ethers.

(8) The photocurable ink composition according to (2) above, wherein the imino group-containing compound is a urethane oligomer.

(9) The photocurable ink composition according to (8) above, including 3 to 25 wt % of the urethane oligomer.

(10) The photocurable ink composition according to any of (1) to (9) above, wherein the,hindered amine is a compound with a structure having thereon a 2,2,6,6-tetramethylpiperidine group.

(11) The photocurable ink composition according to (10) above, including 0.2 to 1 wt % of the hindered amine.

(12) The photocurable ink composition according to any of (1) to (11) above, including at least 50 wt % of the active hydrogen-bearing functional group-bearing compound.

(13) The photocurable ink composition according to any of (1) to (12) above, further having a dendritic polymer.

(14) An ink cartridge, having the photocurable ink composition according to any of (1) to (13) above.

(15) An inkjet recording method for performing recording in use of the photocurable ink composition according to any of (1) to (14) above.

(16) A recorded matter obtained by using the photocurable ink composition according to any of (1) to (15) above.

(17) An inkjet recording apparatus, having the ink cartridge according to (14) above.

One advantage of an aspect of the present invention is that it can provide photocurable ink compositions having excellent storage stability and curability. The aspect of the invention can also provide an ink cartridge, an inkjet recording method and recorded matter which use the photocurable ink composition having an excellent storage stability and curability and are able to form excellent images.

Another advantage of an aspect of the invention is that it can provide a photocurable ink composition which has a rapid reaction rate, resists the influence of oxygen inhibition, and enables thorough curing treatment to be carried out by irradiation with light. The aspect of the invention can additionally provide an ink cartridge and an inkjet recording method that enable the reaction rate to be fast, incur little influence from oxygen inhibition and enable thorough curing treatment to be carried out by irradiation with light, and can provide as well a recorded impression that is thoroughly cured.

Yet another advantage of an aspect of the invention is that it can provide a photocurable ink composition having a good storage stability and endowed with an improved curing sensitivity and polymerization rate. The aspect of the invention can further provide an ink cartridge and an inkjet recording method which are able to form excellent images using such a photocurable ink composition having an excellent curing sensitivity and polymerization rate, and can additionally provide recorded matter thereby obtained.

DESCRIPTION OF THE DRAWINGS

Fig. 1 is a simplified reaction diagram showing a redox cycle for the purpose of explaining how the effects of the invention appear;

Fig. 2 is a simplified reaction diagram showing a hindered amine compound reaction cycle in the redox cycle; and

Fig. 3 is a simplified reaction diagram of a case where, in the redox cycle, the active hydrogen-bearing compound is enriched by the reaction system.

DESCRIPTION OF EXEMPLARY EMBODIMENTS

The photocurable ink composition of the invention is described below based on a preferred embodiment thereof.

The photocurable ink composition of the present embodiment includes at least a photoradical polymerization initiator, a compound having an active hydrogen-bearing functional group, and a hindered amine.

In the compound having an active hydrogen-bearing functional group that is used in the present embodiment, the active hydrogen refers to a hydrogen atom of relatively high reactivity which is present on, for example, a thiol, amino, imino, amido, hydroxyl or carboxyl group.

To reduce the ink viscosity, it is especially preferable for the active hydrogen-bearing functional group on the compound to be an amino group, an imino group or an alcoholic hydroxyl group. A thiol group-containing compound is preferred as a chain transfer agent.

"Thiol group-containing compound" refers generically to compounds having a thiol group represented by the formula R-SH. The content of the thiol compound in the ink composition is preferably from 1 to 20 wt %, and more preferably from 2 to 10 wt %.

Moreover, it is preferable for the above-mentioned active hydrogen-containing compound to be a polymerizable compound having in the structure thereof an unsaturated double bond-containing functional group.

Polymerizable compounds which may be used in the composition of the present embodiment include, but are not limited to, compounds containing various polymerizable groups, such as compounds containing an acrylic group or a methacrylic group, and unsaturated double bond-containing compounds having the chemical formula $CH_2=CH-R$.

The compound having an acrylic group or a methacrylic group is preferably a compound having a (meth)acryloyl group of the formula $CH_2=CH-COOR$ or $CH_3CH=CH-COOR$. The compound having a (meth)acryloyl group is not subject to any particular limitation. However, from the standpoint of curability, it is preferably a dendritic polymer and/or urethane oligomer having (meth)acryloyl groups.

The urethane oligomer has a plurality of reactive functional groups, and preferably has an acrylic equivalent weight of at least 100. Illustrative examples include U-4HA (number of functional groups, 4; average molecular weight, 596; acrylic equivalent weight, 149) and U-15HA (number of functional groups, 15; average molecular weight, 2,300; acrylic equivalent weight, 104), both of which are manufactured by Shin-Nakamura Chemical Corporation.

Double bond-containing compounds of the formula $CH_2=CH-R$ which may be used as the polymerizable compound are not subject to any particular limitation. However, from the standpoint of curability, at least one selected from the group consisting of cyclic olefins, vinyl compounds, allyl compounds, acyclic olefins and conjugated dienes is preferred. In particular, to achieve a good storage stability and reduce ink viscosity, a vinyl or allyl group is preferred. An allyl ether group is especially preferred.

Illustrative examples of cyclic olefins include cyclohexene and cyclooctene. In the present specification, "cyclic olefin" refers to a cyclic compound in which the ring contains carbon-carbon single bonds or carbon-carbon multiple bonds.

The vinyl compounds are exemplified by N-vinyl compounds and vinyl ethers. Illustrative examples include N-vinylformamide, N-vinylcaprolactam; vinyl ethers such as methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether and phenoxypolyethylene glycol vinyl ether; divinyl ethers such as ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, bisphenol A alkylene oxide divinyl ether and bisphenol F alkylene oxide divinyl ether; and polyfunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, the ethylene oxide adduct of trimethylolpropane trivinyl ether, the propylene oxide adduct of trimethylolpropane trivinyl ether, the ethylene oxide adduct of ditrimethylolpropane tetravinyl ether, the propylene oxide adduct of ditrimethylolpropane tetravinyl ether, the ethylene oxide adduct of pentaerythritol tetravinyl ether, the propylene oxide adduct of pentaerythritol tetravinyl ether, the ethylene oxide adduct of dipentaerythritol hexavinyl ether and the propylene oxide adduct of dipentaerythritol hexavinyl ether.

Illustrative examples of allyl compounds include ethylene glycol monoallyl ether, trimethylolpropane allyl ether, diethylene glycol monoallyl ether, pentaerythritol triallyl ether, glycerol monoallyl ether, and the allyl group-bearing polyoxyalkylene compounds made by NOF Corporation under the trade names Uniox, Unilub, Polycerin and Unisafe. Of these, allyl glycol and/or trimethylolpropane allyl ether are preferred.

Acylic olefins are exemplified by alkenes.

Examples of conjugated dienes include 1,2-pentadiene and 1,4-hexadiene.

Of the above-mentioned polymerizable compounds, active hydrogen-bearing polymerizable compounds are especially preferred for enabling the oxidation-reduction reactions to proceed smoothly.

From the standpoint of the reactivity with the above-described polymerizable compound, the compound having an active hydrogen-bearing functional group is preferably a compound which serves as a thiol group-containing chain transfer agent. Of such compounds, alkane thiols, alkylene dithiol and polythiols are more preferred. Thiols with a structure having a long alkyl chain length or which are high-molecular-weight compounds are most preferred from the standpoint of reducing unpleasant odors.

Specific examples of active hydrogen-containing chain transfer agents include 2,2'-(ethylenedioxy)diethylene thiol, pentaerythritol tetrakis(2-mercaptoacetate), pentaerythritol tetrakis(3-mercaptopropionate), 1,4-bis(3-mercaptobutyryloxy)butane (Karenz MT BD1, manufactured by Showa Denko KK), pentaerythritol tetrakis(3-mercaptobutyrate) (Karenz MT PE1, produced by Showa Denko KK) and 1,3,5-tris(3-mercaptobutyloxyethyl)-1,3,5-triazin-2,4,6-(1H,3H, 5H)-trione (Karenz MT NR1, produced by Showa Denko KK). Use may also be made of the following chain transfer agents: bromotrichloromethane ($BrCCl_3$), chloroform ($CHCl_3$), tetrabromomethane ($CBr_4$), 1-butanethiol ($CH_3(CH_2)_3SH$), butyl 3-mercaptopropionate ($HSCH_2CH_2CO_2(CH_2)_3CH_3$), 2,2'-(ethylenedioxy) diethanethiol ($HSCH_2CH_2OCH_2CH_2OCH_2CH_2SH$), ethanethiol ($C_2H_5SH$), 3-mercaptopropionic acid ($HSCH_2CH_2CO_2H$), 4-methylbenzenethiol ($CH_3C_6H_4SH$), methyl 3-mercaptopropionate ($HSCH_2CH_2COOCH_3$), tert-nonyl mercaptan ($(CH_3)_3CCH_2C(CH_3)_2CH_2SH$), pentaerythritol tetrakis(2-mercaptoacetate) ($(HSCH_2CO_2CH_2)_4C$), pentaerythritol tetrakis(3-mercaptopropionate) ($(HSCH_2CH_2COOCH_2)_4C$), 1-pentanethiol ($CH_3(CH_2)_4SH$), 4,4'-thiobisbenzenethiol ($S(C_6H_4SH)_2$), isooctyl 3-mercaptopropionate ($HS-CH_2CH_2COOC_8H_{17}$) and 2,4-diphenyl-4-methyl-1-pentene ($C_6H_5C(CH_3)_2CH_2C(C_6H_5)=CH_2$).

Of these, use of the thiol compounds is preferred. This is because the halogen compounds have an adverse influence on the environment, and may cause deteriorate of the printing medium due to corrosion or the like. Also, with other types of chain transfer agents, there is a possibility that an allyl compound polymerizing effect will not be achieved for reasons having to do with the electron density.

The content of the active hydrogen-bearing chain transfer agent in the ink composition is preferably from 0.01 to 10 wt %, and ore preferably from 0.2 to 5 wt %.

Hindered amine compounds that may be used in the compositions of the present embodiment are exemplified by compounds having a 2,2,6,6-tetramethylpiperidine group in the structure, benzotriazole, triazine and tetrapiperidine compounds.

Illustrative examples include 2-(2H-benzotriazol-2-yl)-4,6-bis(1-methyl-1-phenylethyl)phenol ($C_{30}H_{29}N_{30}$), 2-(2H-benzotriazol-2-yl)-6-dodecyl-4-methylphenol ($C_{25}H_{35}N_{30}$), bis(1-octyloxy-2,2,6,6-tetramethyl-4-piperidyl) sebacate ($C_{44}H_{84}N_2O_6$), bis (2, 2, 6, 6-tetramethyl-4-piperidyl) sebacate ($C_{28}H_{52}N_2O_4$), bis (octadecyl) hydroxylamine ($[CH_3(CH_2)_{17}]_2NOH$), 2-(4,6-diphenyl-1, 3, 5-triazin-2-yl) -5- [(hexyl) oxy] phenol ($C_{27}H_{27}N_3O_2$), poly (4-hydroxy-2,2,6,6-tetramethyl-1-piperidine ethanol-alt-1,4-butanedioic acid) (average Mn, approx. 3,500; average Mn, 3,100 to 4,000) ($(C_{15}H_{29}NO_6)n$), poly[[6-[(1,1,3,3-tetramethylbutyl)amino]-s-triazine-2,4-diyl]-[(2,2,6,6-tetramethyl-4-piperidyl)imino]-hexamethylene-[(2,2,6,6-tetramethyl-4-piperidyl)imino]] (average Mn, approx. 2,000) ($(C_{35}H_{68}N_8)_n$) and 1,5,8,12-tetrakis [4,6-bis(N-butyl-N-1,2,2,6,6-pentamethyl-4-piperidylamino)-1,3,5-triazin-2-yl]-1,5,8,12-tetraazadodecane ($C_{132}H_{250}N_{32}$).

From the standpoint of the storage stability-enhancing effect due to the inhibition of thermal polymerization, a compound having a 2,2,6,6-tetramethylpiperidine group in the structure is especially preferred. Illustrative examples include 2,2,6,6-tetramethylpiperidinooxy, free radicals and bis(1-octyloxy-2,2,6,6-tetramethyl-4-piperidyl)sebacate. Commercial products such as Irgastab UV-10 (Ciba Specialty Chemicals) may also be used.

The content of the above-described hindered amine compound in the ink composition is preferably from 0.01 to 1.2 wt %, and more preferably from 0.1 to 1.0 wt %.

In the composition of the present embodiment, together with a polymerizable compound having an active hydrogen-bearing functional group in the structure, use may also be made of a polymerizable compound containing no active hydrogen. Such a polymerizable compound is exemplified by monofunctional monomers, difunctional monomers and polyfunctional monomers. Illustrative examples of suitable monofunctional monomers include phenoxyethyl acrylate, isobornyl acrylate, methoxydiethylene glycol monoacrylate, acroyl morpholine, lauryl methacrylate, cyclohexyl methacrylate and oxetane methacrylate.

Illustrative examples of suitable difunctional monomers include ethylene glycol dimethacrylate, diethylene glycol diacrylate, diethylene glycol dimethacrylate, tripropylene glycol diacrylate, 1,9-nonanediol diacrylate, polyethylene glycol #400 diacrylate, tetraethylene glycol dimethacrylate, 1,6-hexanediol diacrylate, 1,6-hexanediol dimethacrylate, neopentyl glycol diacrylate, neopentyl glycol dimethacrylate and 1,4-butanediol dimethacrylate.

Illustrative examples of suitable polyfunctional monomers include trimethylolpropane triacrylate, trimethylolpropane trimethacrylate, triacrylates of ethylene oxide adducts of trimethylolpropane, triacrylates of propylene oxide adducts of trimethylolpropane, triacrylates of ethylene oxide adducts of glycerol, triacrylates of propylene oxide adducts of glycerol, pentaerythritol triacrylate, dipentaerythritol hexaacrylate, dipentaerythritol polyacrylate and dendritic polymers having acryloyl groups (e.g., Viscoat #1000 (manufactured by Osaka Organic Chemical Industry, Ltd.).

The above-mentioned dendritic polymers may be broadly classified into the six structures shown below (see "Dendritic Polymers: The World of Higher Functionality Opened Up by MultiBranched Structures" [Dendoritikku kobunshi--tabunki kozo ga hirogeru kokinoka no sekai--], edited by K. Aoi and M. Kakimoto, published by NTS K.K.).

I. Dendrimers
II. Linear dendritic polymers
III. Dendrigraft polymers
IV. Hyperbranch polymers
V. Star hyperbranch polymers
VI. Hypergraft polymers

Of these, categories I to III have a degree of branching (DB) of 1 and have a defect-free structure, whereas categories IV to VI have a random branched structure which may include defects. In particular, dendrimers, compared with commonly used linear polymers, are able to arrange the reactive functional groups on the outermost surface so as to be concentrated in a high density, and thus show promise as functional polymer materials. Hyperbranch polymers, dendrigraft polymers and hypergraft polymers also, though not to the same extent as dendrimers, are able to introduce a large number of reactive functional groups onto the outermost surface, and thus have a high curability.

These dendritic polymers differ from conventional linear polymers and branched polymers in that they repeat a three-dimensionally branched structure and are highly branched. As a result, the viscosity can be kept low compared with linear polymers of the same molecular weight.

Methods of synthesizing dendrimers which may be used in the present embodiment include the "divergent" method in which the polymer is synthesized from the center toward the outside, and the "convergent" method in which polymer synthesis is carried out from the outside toward the center.

It is desirable for the dendrimers, hyperbranch polymers, dendrigraft polymers and hypergraft polymers which may be used in the present embodiment to be solids at room temperature and to have number-average molecular weights in a range of from 1,000 to 100,000. The use of such polymers having a molecular weight in a range of from 2,000 to 50,000 is especially preferred. When the polymer is not a solid at room temperature, the image that is formed has a poor retention. Moreover, at a molecular weight lower than the above range, the fixed image becomes fragile, and at a molecular weight higher than the above range, even if the amount of addition is lowered, the ink viscosity becomes so high as to be impractical from the standpoint of the droplet flight characteristics.

The dendrimers, hyperbranch polymers, dendrigraft polymers and hypergraft polymers which may be used in the present embodiment are preferably dendrimers, hyperbranch polymers, dendrigraft polymers and hypergraft polymers which have radical polymerizable functional groups on the outermost side. By providing the polymer with a radical polymerizable structure on the outermost side, the polymerization reaction will proceed rapidly.

Examples of polymers having a dendrimer structure that may be used include the compounds mentioned in paragraphs [0008] to [0021] of JP-A-2007-182535 and paragraphs [0011] to [0024] of JP-A-2007-182536.

In the present embodiment, it is possible to use only one type of dendrimer, hyperbranch polymer, dendrigraft polymer or hypergraft polymer or to use at the same time another type of dendrimer, hyperbranch polymer, dendrigraft polymer or hypergraft polymer. Illustrative examples of dendritic polymers having a (meth)acryloyl group include Viscoat #1000 (produced by Osaka Organic Chemical Industry, Ltd.). This Viscoat #1000 is a hyperbranch polymer which is composed of dipentaerythritol as the core and functional groups branched thereto. The polymer has acryloyl groups on the outermost surface, and can be suitably used.

In the present embodiment, using both a compound having an acrylic group or a methacrylic group and a compound having a vinyl group or an allyl group is especially preferred from the standpoint of achieving both a high polymerization rate and the quality of being resistant to oxygen inhibition.

The content of the polymerizable compound in the ink composition is preferably from 10 to 90 wt %, and more preferably from 25 to 75 wt %. The content of the dendritic polymer and the urethane oligomer in the ink composition is preferably from 3 to 30 wt %, and more preferably from 5 to 25 wt %.

Including the active hydrogen-bearing functional group-containing compound in an amount such that the content in the ink composition is at least 50 wt % is preferred from the standpoint of curability.

A polymerization initiator is generally included in the ink composition of the present embodiment.
It is advantageous to use as the polymerization inhibitor a radical polymerization inhibitor which generates polymerization initiating radicals upon exposure to light.

The following compounds are suitable as the radical polymerization initiator: acetophenones such as diethoxyacetophenone, 2-hydroxy-2-methyl-1-phenylpropan-1-one, benzyl dimethyl ketal, 4-(2-hydroxyethoxy)phenyl-(2-hydroxy-2-propyl)ketone, 1-hydroxycyclohexyl phenyl ketone, 2-methyl-2-morpholino(4-thiomethylphenyl)propan-1-one, 2-benzyl-2-dimethylamino-1-(4-morpholinophenyl)butanone and 2-hydroxy-2-methyl-1-[4-(1-methylvinyl)phenyl]propanone oligomer; benzoins such as benzoin, benzoin methyl ether, benzoin ethyl ether, benzoin isopropyl ether and benzoin isobutyl ether; benzophenones such as benzophenone, methyl o-benzoyl benzoate, 4-phenylbenzophenone, 4-benzoyl-4'-methyldiphenyl sulfide, 3,3',4,4'-tetra(t-butylperoxylcarbonyl)benzophenone, 2,4,6-trimethylbenzophenone, 4-benzoyl-N,N-dimethyl-N-[2-(1-oxo-2-propenyloxy)ethyl]benzenemethanium bromide and (4-benzoylbenzyl)trimethylammonium chloride; and thioxanthones such as 2-isopropylthioxanthone, 4-isopropylthioxanthone, 2,4-diethylthioxanthone, 2,4-dichlorothioxanthone, 1-chloro-4-propoxythioxanthone, 2-(3-dimethylamino-2-hydroxy)-3,4-dimethyl-9H-thioxanthon-9-one methochloride. Of these, acetophenones, benzophenones and acyl phosphinoxide compounds are preferred, and acyl phosphinoxide compounds are especially preferred. In particular, 2-hydroxy-2-methyl-1-phenylpropan-1-one and 2-methyl-2-morpholino(4-thiomethylphenyl)propan-1-one are preferred.

Photoradical polymerization initiators that are available under the trade names Vicure 10 and 30 (Stauffer Chemical), Irgacure 127, 184, 500, 651, 2959, 907, 369, 379, 754, 1700, 1800, 1850, 819, OXE01, Darocur 1173, TPO and ITX (Ciba Specialty Chemicals), Quantacure CTX (Aceto Chemical), Kayacure DETX-S (Nippon Kayaku Co., Ltd.) and ESACURE KIP150 (Lamberti) may also be used.

The content of the polymerization initiator in the ink composition is preferably from 1 to 20 wt %, and more preferably from 2 to 10 wt %.

The photoradical polymerization initiator used in the composition of the present embodiment may be suitably selected from among those which are sensitive to the active light to be irradiated, such as 400 to 200 nm UV, deep UV, g-line, h-line, i-line, KrF excimer laser light, ArF excimer laser light, electron beams, x-rays, molecular beams and ion beams.

Colorants which can be used in ordinary inks may be used without particular limitation in the compositions of the present embodiment. Such colorants are exemplified by pigments and dyes. From the standpoint of the durability of the printed impression, it is particularly advantageous for the colorants used in this case to be pigments.

Dyes used in the present embodiment may be any of various types of dyes commonly used in inkjet recording, such as direct dyes, acid dyes, food dyes, basic dyes, reactive dyes, disperse dyes, vat dyes, soluble vat dyes and reactive dispersion dyes.

Pigments used in the present embodiment may be inorganic pigments or organic pigments without any particular limitation.

Inorganic pigments that may be used include titanium oxide and iron oxide, and also carbon black manufactured by known methods such as the contact process, the furnace process and the thermal process.

Some examples of organic pigments that may be used include azo pigments (including azo lake, insoluble azo pigments, condensed azo pigments, chelated azo pigments), polycyclic pigments (e.g., phthalocyanine pigments, perylene pigments, perinone pigments, anthraquinone pigments, quinacridone pigments, dioxazine pigments, thioindigo pigments, isoindolinone pigments and quinophthalone pigments), dye chelates (e.g., basic dye chelates, acidic dye chelates), nitro pigments, nitroso pigments and aniline black.

Specific examples of suitable pigments include the following carbon blacks: C.I. Pigment Black 7; No. 2300, No. 900, MCF88, No. 33, No. 40, No. 45, No. 52, MA7, MA8, MA100 and No. 2200B produced by Mitsubishi Chemical Corporation; Raven 5750, Raven 5250, Raven 5000, Raven 3500, Raven 1255 and Raven 700 produced by Colombian Chemical Co.; Regal 400R, Regal 330R, Regal 660R, Mogul L, Mogul 700, Monarch 800, Monarch 880, Monarch 900, Monarch 1000, Monarch 1100, Monarch 1300 and Monarch 1400 produced by Cabot Corporation; and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A and Special Black 4 produced by Degussa.

Examples of pigments used in yellow inks include C.I. Pigment Yellow 1, 2, 3, 12, 13, 14, 16, 17, 73, 74, 75, 83, 93, 95, 97, 98, 109, 110, 114, 120, 128, 129, 138, 150, 151, 154, 155, 180, 185 and 213.

Examples of pigments used in magenta inks include C.I. Pigment Red 5, 7, 12, 48 (Ca), 48 (Mn), 57 (Ca), 57:1, 112, 122, 123, 168, 184, 202, 209, and C.I Pigment Violet 19.

Examples of pigments used in cyan inks include C.I. Pigment Blue 1, 2, 3, 15:3, 15:4, 60, 16 and 22.

According to a preferred aspect of the present embodiment, the pigment has an average particle size in a range of preferably from 10 to 200 nm, and more preferably from about 50 to about 150 nm. The amount of colorant added to the ink composition is preferably in a range of from about 0.1 to about 25 wt %, and more preferably in a range of from about 0.5 to about 15 wt %.

In cases where the ink composition includes a colorant, a plurality of colorant-containing ink compositions may exist for each color. To illustrate, in addition to the four basic colors yellow, magenta, cyan and black, dark and light colors of the same series may be added to each color. For example, in addition to magenta, there is light magenta and dark red; in addition to cyan, there is light cyan and dark blue; and in addition to black, there are the light colors gray and light black, and the dark color mat black.

Other additives which may be advantageously added to ink compositions of the present embodiment are described below.

It is preferable to include a nonionic surfactant in the ink compositions of the present embodiment.

Preferred examples of nonionic surfactants which may be used in the present embodiment include, but are not limited to, polysiloxane surfactants. Suitable polysiloxane surfactants are exemplified by BYK-UV3570, BYK-UV3500, BYK-UV3510, BYK-347 and BYK-348 (all produced under the indicated trade names by BYC-Chemie). It is preferable to add at least one selected from among these to the ink compositions of the present embodiment.

In the present embodiment, it is advantageous to include a polysiloxane surfactant in the ink composition in an amount of preferably from 0.1 to 5 wt %, and more preferably from 0.2 to 2 wt %. By including at least 0.1 wt % of a nonionic surfactant in the ink composition, the ability of each ink composition to wet the recording medium can be increased.
On the other hand, setting the content of nonionic surfactant in the ink composition to not more than 5 wt % discourages bleeding of the image formed by the ink composition on the recording medium.

The ink composition of the present embodiment is prepared so as to include suitable ingredients selected from those described above. It is preferable for the ink composition thus obtained to have a viscosity at 20°C of less than 15 mpa·s. In addition, it is preferable for the ink composition of the present embodiment to have a surface tension at 20°C of preferably not more than 45 mN/m, and more preferably in a range of from 25 to 45 mN/m. By regulating the viscosity and surface tension in this way, an ink composition having desirable properties for use in an inkjet recording method can be obtained. Regulation of the viscosity and surface tension may be carried out by suitably selecting the types and adjusting the amounts of solvents and various additives included in the ink composition.

Ink cartridges which use the ink compositions of the present embodiment may be employed in, for example, ordinary writing implements, recording meters and pen plotters, although use in inkjet recording methods is especially preferred. Inkjet recording methods capable of using such ink cartridges include any recording methods in which the ink composition is discharged as droplets from fine nozzles and the droplets are deposited on a recording medium. Examples of inkjet recording methods capable of using the ink composition of the present embodiment include known techniques such as electrostatic suction, pressure fluctuation using a piezoelectric element or a quartz resonator, and pressure generation by heating.

Methods for preparing the ink composition in the present embodiment are exemplified by, but not limited to, a method in which the various ingredients to be included in the ink composition are thoroughly mixed together and uniformly dissolved, after which the mixture is filtered under applied pressure with a membrane filter having a pore size of 0.8 μm, and the resulting solution is degassed using a vacuum pump.

Next, the above-described ink composition may be rendered into an ink set of one or more such compositions and used in the form of ink cartridges which integrally or independently hold the ink compositions. This is preferable for a number of reasons, such as convenience in handling. Ink cartridges built to contain ink compositions are familiar in the field to which the present invention relates, and may be arrived at by the suitable use of a method known to the art.

EXAMPLES

The invention is illustrated more fully through the following examples. It should be understand, however, that the examples provided below are not intended to limit the invention.

Preparation of Clear, Colorless Ink Compositions:
The compounding ingredients in Tables 1 to 3 below were mixed and completely dissolved, and the resulting solutions were mixed and stirred at room temperature for 30 minutes. The solutions were then filtered with a 5 μm membrane filter, thereby preparing the clear, colorless inks of Examples 1 to 8 and 11, and Comparative Examples 1 to 11.

Preparation of Black Ink Compositions:
Black inks having the compositions shown in Table 3 below were prepared as follows. Fifteen parts by weight of C.I. Pigment Black 7, 5 parts by weight of a polyoxyalkylene adduct of polyalkylene amine (Discole N-518, manufactured by Dai-ichi Kogyo Seiyaku Co., Ltd.) as a dispersant and 80 parts by weight of ethylene glycol monoallyl ether (abbreviated below as "AG") were mixed and stirred to form a mixture, which mixture was then dispersed together with zirconia beads (diameter, 1.5 mm) for 6 hours using a sand mill (Yasukawa Seisakujo). The zirconia beads were subsequently separated off with a separator, giving Pigment Dispersion A. Next, the solvents and various additives other than AG, pigments and dispersants in the formulated ingredients shown in the following tables were mixed and completely dissolved, creating an ink vehicle, after which the above pigment dispersion A was gradually added in dropwise fashion to the ink vehicle under stirring. Following the completion of dropwise addition, mixing and stirring were continued for 30 minutes at room temperature. Next, filtration with a 5 μm membrane filter was carried out, yielding the black ink compositions for Examples 9, 10, 12 and 13 shown in Table 3 below.

Table 1

|  | EX 1 | EX 2 | EX 3 | CE 1 | CE 2 | CE 3 | CE 4 |
|---|---|---|---|---|---|---|---|
| Ethylene glycol monoallyl ether | 74.4 | 25.0 | 71.9 | 72.1 | 71.9 | 71.1 | 72.3 |
| Trimethylolpropane diallyl ether | - - | 49.4 | - - | - - | - - | - - | - - |
| N-Vinylformamide |  |  |  |  |  |  |  |

(continued)

|  | EX 1 | EX 2 | EX 3 | CE 1 | CE 2 | CE 3 | CE 4 |
|---|---|---|---|---|---|---|---|
| Tripropylene glycol diacrylate |  |  |  |  |  |  |  |
| Viscoat #1000 | 20.0 | 20.0 | 15.0 | 15.0 | 15.0 | 15.0 | 15.0 |
| U-15HA | - - | - - | 7.5 | 7.5 | 7.5 | 7.5 | 7.5 |
| Irgacure 819 | 4.0 | 4.0 | 4.0 | 4.0 | 4.0 | 4.0 | 4.0 |
| Irgacure 127 | 1.0 | 1.0 | 1.0 | 1.0 | 1.0 | 1.0 | 1.0 |
| BYK-UV3500 | 0.2 | 0.2 | 0.2 | 0.2 | 0.2 | 0.2 | 0.2 |
| Irgastab UV-10 | 0.2 | 0.2 | 0.2 | - - | - - | - - | - - |
| MEHQ | - - | - - | - - | - - | 0.2 | 1.0 | - - |
| Karenz MT NR1 | 0.2 | 0.2 | 0.2 | 0.2 | 0.2 | 0.2 | - - |
| Storage stability (60°C, 5 days) | 5.8% | 3.1% | 7.2% | gelation | gelation | gelation | gelation |
| Rating | OK | OK | OK | NG | NG | NG | NG |
| Curability (cumulative exposure dose, 3500 mJ/cm$^2$) | A | A | AA | A | A | A | B |

Table 2

|  | EX 4 | EX 5 | EX 6 | CE 5 | CE 6 | CE 7 | CE 8 | CE 9 | CE 10 |
|---|---|---|---|---|---|---|---|---|---|
| Ethylene glycol monoallyl ether |  |  |  |  |  |  |  |  |  |
| Trimethylolpropane diallyl ether |  |  |  |  |  |  |  |  |  |
| N-Vinylformamide | 25.0 | 25.0 | 25.0 | 25.0 | 25.0 | 25.0 | - - | 25.0 | 25.0 |
| Tripropylene glycol diacrylate | 69.6 | 49.6 | 62.1 | 69.8 | 69.6 | 68.8 | 94.6 | 49.8 | 62.3 |
| Viscoat #1000 | - - | 20.0 | - - | - - | - - | - - | - - | 20.0 | - - |
| U-15HA | - - | - - | 7.5 | - - | - - | - - | - - | - - | 7.5 |
| Irgacure 819 | 4.0 | 4.0 | 4.0 | 4.0 | 4.0 | 4.0 | 4.0 | 4.0 | 4.0 |
| Irgacure 127 | 1.0 | 1.0 | 1.0 | 1.0 | 1.0 | 1.0 | 1.0 | 1.0 | 1.0 |
| BYK-UV3500 | 0.2 | 0.2 | 0.2 | 0.2 | 0.2 | 0.2 | 0.2 | 0.2 | 0.2 |
| Irgastab UV-10 | 0.2 | 0.2 | 0.2 | - - | - - | - - | 0.2 | - - | - - |
| MEHQ | - - | - - | - - | - - | 0.2 | 1.0 | - - | - - | - - |
| Karenz MT NR1 |  |  |  |  |  |  |  |  |  |
| Storage stability (60°C, 5 days) | 3.7% | 4.2% | 3.9% | 72.6% | 39.2% | 10.2% | 88.9% | gelation | gelation |
| Rating | OK | OK | OK | NG | NG | NG | NG | NG | NG |
| Curability (cumulative exposure dose, 3500 mJ/cm$^2$) | A | AA | A | A | A | A | B | A | A |

Table 3

| | EX 7 | EX 8 | EX 9 | EX 10 | EX 11 | EX 12 | EX 13 | CE 11 |
|---|---|---|---|---|---|---|---|---|
| Ethylene glycol monoallyl ether | 71.4 | - - | 30.0 | 63.4 | 71.6 | 29.0 | 63.6 | |
| Ethylene glycol dimethacrylate | - - | 71.4 | - - | - - | - - | | | 71.6 |
| Trimethylolpropane diallyl ether | - - | - - | 33.4 | - - | - - | 34.6 | | |
| Viscoat #1000 | 20.0 | 20.0 | 12.5 | 12.5 | 20.0 | 12.5 | 12.5 | 20.0 |
| U-15HA | - - | - - | 7.5 | 7.5 | - - | 7.5 | 7.5 | |
| Irgacure 819 | 6.4 | 6.4 | 6.4 | 6.4 | 6.4 | 6.4 | 6.4 | 6.4 |
| Irgacure 127 | 1.6 | 1.6 | 1.6 | 1.6 | 1.6 | 1.6 | 1.6 | 1.6 |
| BYK-UV3500 | 0.2 | 0.2 | 0.2 | 0.2 | 0.2 | 0.2 | 0.2 | 0.2 |
| Irgastab UV-10 | 0.2 | 0.2 | 0.2 | 0.2 | 0.2 | 0.2 | 0.2 | 0.2 |
| Karenz MT NR1 | 0.2 | 0.2 | 0.2 | 0.2 | - - | - - | - - | - - |
| MEHQ | | | | | | | | |
| Pigment Black 7 | - - | - - | 6.0 | 6.0 | - - | 6.0 | 6.0 | - - |
| Dispersant | - - | - - | 2.0 | 2.0 | - - | 2.0 | 2.0 | - - |
| Storage stability (60°C, 5 days) | 7.1% | 6.0% | 2.2% | 1.1% | 6.6% | 1.3% | 0.4% | 5.3% |
| Curability (mJ/cm$^2$) at 5 $\mu$m film thickness with oxygen blocked | 67 | 87 | 1,118 | 685 | 60 | 924 | 576 | 78 |
| Curability (mJ/cm$^2$) at 5 $\mu$m film thickness in presence of oxygen | 3,238 | 4,205 | 1,745 | 1,018 | 2,900 | 1,489 | 925 | did not cure |
| Rating | OK | OK | OK | OK | OK | OK | OK | NG |

Details concerning the ingredients in the above tables are provided below (the following information applies to the subsequent tables as well).

• U-15HA (Shin-Nakamura Chemical Corporation): An urethane oligomer

• Viscoat #1000 (Osaka Organic Chemical Industry): A dendritic polymer having (meth)acryloyl groups

• Irgacure 819, Irgacure 127 (both produced by Ciba Specialty Chemicals): Photoradical polymerization initiators

• BYK-UV3500 (BYK-Chemie): An additive

• Irgastab UV-10 (Ciba Specialty Chemicals): A compound containing a 2,2,6,6-tetramethylpiperidine group (HALS)

• MEHQ (Kanto Chemical Co., Ltd.): A polymerization inhibitor

• Karenz MT NR1 (Showa Denko KK): A thiol compound having an active hydrogen

Using a method like that used for producing the above-described black ink compositions, the pigment was changed to Pigment Yellow 213, Pigment Violet 19 or Pigment Blue 15:3, and the respective ink compositions for use in the ink set in Example 8 were prepared. The white ink composition and the fine particles of titanium dioxide used as the white pigment in the white ink composition were produced by the following methods.
Production of Fine Particles of Titanium Dioxide:
A titanium-containing ore was dissolved in sulfuric acid to obtain a titanium sulfate solution. The titanium sulfate solution was then hydrolyzed to form hydrous titanium oxide, to which the following ingredients were added in the indicated amounts per 100 parts by weight of TiO$_2$ equivalent therein: 0.50 part by weight of ammonium phosphate, 0.30 part by weight of potassium sulfate, and 0.30 part by weight of aluminum sulfate. The hydrous titanium oxide was then heated in an experimental rotary muffle oven to a product temperature of 1,020°C. The fine particles of titanium dioxide thus formed were cooled to room temperature and examined in scanning electron micrographs, whereupon the product was found to be in the form of anatase having an average primary particle size of 0.13 μm.

Preparation of White Ink Compositions:

Fifteen parts by weight of titanium dioxide fine particles as the above-mentioned surface-treated white pigment (PW6), 5 parts by weight of the polyoxyalkylene adduct of polyalkyleneamine (Discoal N-518, produced by Dai-ichi Kogyo Seiyaku) as the dispersant, and 80 parts by weight of ethylene glycol monoallyl ether (abbreviated below as "AG") were mixed to form a slurry, following which a sand mill (Yasukawa Seisakujo) was filled with the slurry and zirconium beads (1.0 mm diameter) in an amount equal to 1.5 times the amount of slurry, and dispersion was carried out for 2 hours. The beads were then removed, giving a 60 wt % monomer dispersion of titanium dioxide fine particles. Next, using the same procedure as that described above for preparing the black ink composition, white ink compositions having the compositions shown in Tables 14 and 15 below were prepared.

Print Evaluation Method 1:

Using the ink compositions obtained in Examples 7 to 13 according to the invention and Comparative Example 11, and using an inkjet printer (model PM-G920, manufactured by Seiko Epson Corporation), solid printing was carried out at standard temperature and pressure by filling the ink composition into a photoblack column. A4 size OHP film (XEROX FILM, frameless; Fuji Xerox Co., Ltd.) was used as the recording medium. Printing was carried out to a maximum ink film thickness of the ink composition on the printed image of 5 μm, and the energy required for curing, measured as the length of time until the ink-coated film cured completely with an UV irradiating light source having a total exposure dose of 120 mW/cm$^2$, was determined. The curability (mJ/cm$^2$) determined in this case was the curability in the presence of oxygen.
The curability at this time was rated according to the following criteria. The results are shown in Tables 1 to 3. Indicators of Cure:

AA:   Completely cured
A:    No problems in terms of practical use, though ink remains tacky
B:    Surface is uncured
C:    Interior also is uncured

Print Evaluation Method 2:

Using the ink sets obtained in Examples 14 and 15 shown in Table 4 and using an inkjet printer (PM-G920, manufactured by Seiko Epson Corporation), full-color image printing was carried out at standard temperature and pressure by filling the ink composition Bk1 into a photoblack column, filling the ink composition W1 into a gloss optimizer column, and filling the respective colored inks into corresponding ink columns (i.e., filling ink composition Y1 into a yellow column, ink composition Ml into a magenta column, and ink composition Cl into a cyan column). Solid printing was carried out with the ink composition Wl in such a way as not to overlap the color image. A4 size OHP film (XEROX FILM, frameless; Fuji Xerox Co., Ltd.) was used as the recording medium. Printing was carried out to a maximum ink film thickness of the ink composition on the printed image of 5 μm, following which curing treatment was carried out with an UV irradiating light source having a total exposure dose of 120 mW/cm$^2$ under curing conditions such as to give a cumulative light exposure of 3,000 mJ/cm$^2$, thereby confirming that a cured full-color image and white printed areas can be obtained.
Table 4

|  | Example 14 | | | | | Example 15 | | | | |
|---|---|---|---|---|---|---|---|---|---|---|
|  | Bk1 | Y1 | Ml | C1 | Wl | Bk1 | Y1 | Ml | Cl | Wl |
| Ethylene glycol monoallyl ether | 63.4 | 63.4 | 63.4 | 63.4 | 63.4 | 63.6 | 63.6 | 63.6 | 63.6 | 63.6 |
| Viscoat #1000 | 12.5 | 12.5 | 12.5 | 12.5 | 12.5 | 12.5 | 12.5 | 12.5 | 12.5 | 12.5 |
| U-15HA | 7.5 | 7.5 | 7.5 | 7.5 | 7.5 | 7.5 | 7.5 | 7.5 | 7.5 | 7.5 |

(continued)

| | Example 14 | | | | | Example 15 | | | | |
|---|---|---|---|---|---|---|---|---|---|---|
| | Bk1 | Y1 | MI | C1 | WI | Bk1 | Y1 | MI | CI | WI |
| Irgacure 819 | 6.4 | 6.4 | 6.4 | 6.4 | 6.4 | 6.4 | 6.4 | 6.4 | 6.4 | 6.4 |
| Irgacure 127 | 1.6 | 1.6 | 1.6 | 1.6 | 1.6 | 1.6 | 1.6 | 1.6 | 1.6 | 1.6 |
| BYK-UV3500 | 0.2 | 0.2 | 0.2 | 0.2 | 0.2 | 0.2 | 0.2 | 0.2 | 0.2 | 0.2 |
| Irgastab UV-10 | 0.2 | 0.2 | 0.2 | 0.2 | 0.2 | 0.2 | 0.2 | 0.2 | 0.2 | 0.2 |
| Karenz MT NR1 | 0.2 | 0.2 | 0.2 | 0.2 | 0.2 | - - | - - | - - | - - | - - |
| Colorant | PBk 7 | PY 213 | PV 19 | PB 15:3 | PW 6 | PBk 7 | PY 213 | PV 19 | PB 15:3 | PW 6 |
| | 6.0 | 6.0 | 6.0 | 6.0 | 6.0 | 6.0 | 6.0 | 6.0 | 6.0 | 6.0 |
| Dispersant | 2.0 | 2.0 | 2.0 | 2.0 | 2.0 | 2.0 | 2.0 | 2.0 | 2.0 | 2.0 |

Viscosity measurement was carried out using an MCR-300 rheometer manufactured by Nihon SiberHegner KK.

Measurement of the curability (mJ/cm$^2$) under oxygen blocking was carried out with an MCR-301 rheometer, manufactured by Nihon SiberHegner KK, for use with UV curing units.

The storage stability was evaluated by enclosing a sample of the ink composition in a light-shielded container and holding it for five days in a light-shielded test chamber at 60°C, then using the following formula to determine the storage stability.

```
(viscosity after 5 days of standing at 60°C - initial

viscosity)/(initial viscosity) × 100 (%)
```

If, on calculating the result, the numerical value was found to be above +10% or the ink composition gelled and formed a solid, making measurement impossible, a rating of "NG" was assigned.

The results of the foregoing evaluations are shown in the respective columns in above Tables 1 to 3.

It is apparent from Table 1 that the storage stability was poor in Comparative Examples 1 to 3, which do not contain a hindered amine compound, and in Comparative Example 4, which does not contain a hindered amine compound or an active

hydrogen-bearing chain transfer agent.

It is apparent from Table 2 that the storage stability was poor in Comparative Examples 5 to 7, 9 and 10, which do not contain a hindered amine compound, and in Comparative Example 8, which has only a polymerizable compound lacking an active hydrogen.

It is apparent from Table 3 that, compared with an oxygen-blocked condition, a higher curing energy is required in the presence of oxygen due to the influence of oxygen inhibition. Moreover, in the presence of oxygen, curing was achieved at a lower energy in Examples 9, 10, 12 and 13, which contain carbon black, than in Examples 7, 8 and 11 according to the invention, which do not contain carbon black. This indicates that the active hydrogen on the urethane oligomer included in Examples 9, 10, 12 and 13 acts even further to suppress oxygen inhibition, resulting in good curing. Accordingly, the presence of a plurality of types of active hydrogen radicals appears to further enhance the curability.

Next, each of the black ink compositions shown in Table 5 was prepared by a conventional method, and experiments were carried out under reduced exposure conditions.

Table 5

| | Example 16 | Example 17 | Comp. Ex. 12 | Comp. Ex. 13 |
|---|---|---|---|---|
| Allyl glycol | 75.6 | 75.6 | - - | - - |
| EGdMA | - - | - - | 71.6 | 83.6 |
| V#1000 | 4 | - - | 8.5 | - - |

(continued)

|  | Example 16 | Example 17 | Comp. Ex. 12 | Comp. Ex. 13 |
|---|---|---|---|---|
| U-15HA | 4 | 8 | 8.5 | - - |
| Irgacure 819 | 4 | 4 | 4 | 4 |
| Irgacure 127 | 1 | 1 | 1 | 1 |
| BYK-UV3570 | 0.2 | 0.2 | 0.2 | 0.2 |
| Irgastab UV10 | 0.2 | 0.2 | 0.2 | 0.2 |
| 3TP-6 | 5 | 5 |  | 5 |
| Pigment black-7 | 6 | 6 | 6 | 6 |
| Curability | AA | A | B | C |
| Storage stability | A | A | A | A |

Details on the respective ingredients in the table are as follows.

Allyl glycol (manufactured by Nippon Nyukazai Co., Ltd.): An allyl compound

V#1000 (Osaka Organic Chemical Industry, Ltd.): A dendritic polymer having (meth)acryloyl groups

U-15HA (Shin-Nakamura Chemical Corporation): A urethane oligomer

Irgacure 819, Irgacure 127 (both available from Ciba Specialty Chemicals): Polymerization initiators

BYK-UV3570 (BYK-Chemie), Irgastab UV-10 (Chiba Specialty Chemicals): Additives

3TP-6 (Maruzen Petrochemical Co., Ltd.): A thiol compound

EGdMA (Kyoeisha Chemical Co., Ltd.): A monomer having a (meth)acryloyl group

Experiment:

Using a PX-G920 inkjet printer made by Seiko Epson Corporation, the black ink compositions in the respective examples of the invention and the comparative examples were filled into respective rows of nozzles and a solid pattern was printed onto a PET film by depositing droplets of the ink on the film under standard temperature and pressure. Next, curing treatment was carried out under curing conditions that consisted of exposure to UV light at wavelengths of 365, 380 and 395 nm to a cumulative light exposure of 500 mJ/cm$^2$ using an irradiation device having an irradiation intensity of 60 mW/cm$^2$.

The curability at this time was evaluated according to the following criteria. The results are shown in Table 5. Indicators of Cure:

AA: Completely cured
A: No problems in terms of practical use, though ink remains tacky
B: Surface is uncured
C: Interior also is uncured

When the exposure dose was lowered in this way, the ink composition in Example 16, which included both a urethane oligomer and a dendritic polymer, had an especially good curability.

In addition, each of the black ink compositions shown in Tables 6 and 7 were prepared by conventional methods, and their curabilities under different irradiation conditions were checked.

Table 6

|  | EX 19 | EX 20 | EX 21 | EX 22 | EX 23 | EX 24 | EX 25 | EX 26 | EX 27 | EX 28 | EX 29 |
|---|---|---|---|---|---|---|---|---|---|---|---|
| Ethylene glycol monoallyl ether | 80.4 | 75.6 | 70.6 | 68.4 | 63.6 | 58.6 | 75.7 | 74.8 | 74.6 | 75.6 | 76.6 |
| Trimethylolpropane diallyl ether |  |  |  |  |  |  |  |  |  |  |  |

(continued)

|  | EX 19 | EX 20 | EX 21 | EX 22 | EX 23 | EX 24 | EX 25 | EX 26 | EX 27 | EX 28 | EX 29 |
|---|---|---|---|---|---|---|---|---|---|---|---|
| Tripropylene glycol diacrylate |  |  |  |  |  |  |  |  |  |  |  |
| Ethylene glycol dimethacrylate |  |  |  |  |  |  |  |  |  |  |  |
| N-Vinylformamide |  |  |  |  |  |  |  |  |  |  |  |
| Viscoat #1000 | 4 | 4 | 4 | 12.5 | 12.5 | 12.5 | 4 | 4 | 4 | 8 | 4 |
| U-15HA | 4 | 4 | 4 | 7.5 | 7.5 | 7.5 | 4 | 4 | 4 |  | 3 |
| Irgacure 819 | 4 | 4 | 4 | 4 | 4 | 4 | 4 | 4 | 4 | 4 | 4 |
| Irgacure 127 | 1 | 1 | 1 | 1 | 1 | 1 | 1 | 1 | 1 | 1 | 1 |
| BYK-UV3570 | 0.2 | 0.2 | 0.2 | 0.2 | 0.2 | 0.2 | 0.2 | 0.2 | 0.2 | 0.2 | 0.2 |
| Irgastab UV10 | 0.2 | 0.2 | 0.2 | 0.2 | 0.2 | 0.2 | 0.1 | 1 | 1.2 | 0.2 | 0.2 |
| MEHQ |  |  |  |  |  |  |  |  |  |  |  |
| Pigment Black 7 | 6 | 6 | 6 | 6 | 6 | 6 | 6 | 6 | 6 | 6 | 6 |
| 3TP-6 | 0.2 | 5 | 10 |  |  |  | 5 | 5 | 5 | 5 | 5 |
| Karenz MT NR1 |  |  |  | 0.2 | 5 | 10 |  |  |  |  |  |
| Storage stability (60°C, 5 days) | A | A | B | A | A | B | B | A | A | A | A |
| Curability (cumulative light exposure, 500 mJ/cm$^2$) | A | AA | AA | A | AA | A | AA | A | B | B | A |
| Curability (cumulative light exposure, 3,000 mJ/cm$^2$) | A | AA | AA | A | AA | AA | AA | AA | B | A | AA |

Table 7

| | EX 30 | EX 31 | EX 32 | EX 33 | EX 34 | CE 14 | CE 15 | CE 16 | CE 17 | CE 18 | CE 19 | CE 20 |
|---|---|---|---|---|---|---|---|---|---|---|---|---|
| Ethylene glycol monoallyl ether | 54.6 | 49.6 | | | 46 | 61.3 | 66.3 | 73.8 | 65.9 | 65.1 | 30 | |
| Trimethylolpropane diallyl ether | | | 74.6 | | | | | | | | | |
| Tripropylene glycol diacrylate | | | | | 29.6 | | | | | | 45.6 | |
| Ethylene glycol dimethacrylate | | | | | | | | | | | | 71.6 |
| N-Vinylformamide | | | | 74.6 | | | | | | | | |
| Viscoat #1000 | 4 | 4 | 4 | 4 | 4 | 15 | 15 | 15 | 15 | 15 | 4 | 4 |
| U-15HA | 25 | 30 | 4 | 4 | 4 | 7.5 | 7.5 | | 7.5 | 7.5 | 4 | 4 |
| Irgacure 819 | 4 | 4 | 4 | 4 | 4 | 4 | 4 | 4 | 4 | 4 | 4 | 4 |
| Irgacure 127 | 1 | 1 | 1 | 1 | 1 | 1 | 1 | 1 | 1 | 1 | 1 | 1 |
| BYK-UV3570 | 0.2 | 0.2 | 0.2 | 0.2 | 0.2 | 0.2 | 0.2 | 0.2 | 0.2 | 0.2 | 0.2 | 0.2 |
| Irgastab UV10 | 0.2 | 0.2 | 0.2 | 0.2 | 0.2 | | | | | | 0.2 | 0.2 |
| MEHQ | | | | | | | | | 0.2 | 1 | | |
| Pigment Black 7 | 6 | 6 | 6 | 6 | 6 | 6 | 6 | 6 | 6 | 6 | 6 | 6 |
| 3TP-6 | 5 | 5 | 5 | 5 | 5 | 5 | | | | | 5 | 5 |
| Karenz MT NR1 | | | | | | | | | 0.2 | 0.2 | | |
| Storage stability (60°C, 5 days) | A | B | A | A | A | C | C | C | C | C | A | A |
| Curability (cumulative light exposure, 500 mJ/cm$^2$) | AA | AA | AA | AA | B | A | B | C | A | A | C | C |
| Curability (cumulative light exposure, 3,000 mJ/cm$^2$) | AA | AA | AA | AA | A | A | A | B | A | A | B | B |

Experiment:

Using a PX-G920 inkjet printer made by Seiko Epson Corporation, the black ink compositions in the respective examples of the invention and the comparative examples were filled into respective rows of nozzles and a solid pattern was printed onto a PET film by depositing droplets of the ink on the film under standard temperature and pressure. Next, curing treatment was carried out under curing conditions that consisted of exposure to UV light at a wavelength of 365, 380 or 395 nm to a cumulative light exposure of 500 mJ/cm$^2$ using an irradiation device having an irradiation intensity of 60 mW/cm$^2$, and to a cumulative light exposure of 3,000 mJ/cm$^2$ using a UV irradiation light source having a total exposure dose of 120 mW/cm$^2$.

The storage stability and curability at this time were evaluated according to the following criteria. The results are shown in Tables 6 and 7.

Storage Stability:

A:     Increase in viscosity after accelerated test was less than 10%

B:     Increase in viscosity after accelerated test was at least 10% but less than 50%

C:     Increase in viscosity after accelerated test was at least 50% or gelation occurred

Indicators of Cure:

AA:     Completely cured
A:     No problems in terms of practical use, though ink remains tacky
B:     Surface is uncured
C:     Interior also is uncured

As is apparent from the above examples of the invention, the curability was particularly outstanding when the content of the urethane oligomer was from 3 to 25 wt %, the content of the hindered amine compound was from 0.2 to 1 wt %, the content of the thiol group-containing compound was from 0.2 to 5 wt %, and the content of the active hydrogen-bearing functional group-containing polymerizable compound was at least 50 wt %.

The present invention is applicable not only to the above-described black inks, but also to other colored inks and even liquids for specific applications. For example, the invention is applicable as liquid compositions for the formation of electrode materials, color filters and the like for use in the manufacture of, e.g., liquid crystal displays, electroluminescence (EL) displays and field emission displays (FED).

This invention has industrial applicability as photocurable ink compositions endowed with a good storage stability, resistance to the effects of oxygen inhibition, and an improved curing sensitivity and polymerization rate; and also as ink cartridges, inkjet recording methods and recorded matter which use such photocurable ink compositions.

**Claims**

1. A photocurable ink composition comprising at least a photoradical polymerization initiator, a compound having an active hydrogen-bearing functional group, and a hindered amine.

2. The photocurable ink composition according to claim 1, wherein the active hydrogen-bearing functional group is selected from among thiol, amino, imino and alcoholic hydroxyl groups.

3. The photocurable ink composition according to claim 2, wherein the compound having an active hydrogen-bearing functional group is a thiol group-containing chain transfer agent.

4. The photocurable ink composition according to claim 3, including 0.2 to 5 wt % of the thiol group-containing chain transfer agent.

5. The photocurable ink composition according to claim 1 or 2, wherein the compound having an active hydrogen-bearing functional group is a polymerizable compound which further includes an unsaturated double bond.

6. The photocurable ink composition according to claim 5, wherein the polymerizable compound which includes an unsaturated double bond is a compound selected from among compounds having an acrylic group or a methacrylic group and polymerizable compounds having a vinyl group or an allyl group.

7. The photocurable ink composition according to claim 6, wherein the polymerizable compound which includes an unsaturated double bond is at least one selected from among N-vinyl compounds, vinyl ethers, allyl glycols and trimethylolpropane allyl ethers:

8. The photocurable ink composition according to claim 2, wherein the imino group-containing compound is a urethane oligomer.

9. The photocurable ink composition according to claim 8, including 3 to 25 wt % of the urethane oligomer.

10. The photocurable ink composition according to any of claims 1 to 9, wherein the hindered amine is a compound with a structure having thereon a 2,2,6,6-tetramethylpiperidine group.

11. The photocurable ink composition according to claim 10, including 0.2 to 1 wt % of the hindered amine.

12. The photocurable ink composition according to any of claims 1 to 11, including at least 50 wt % of the active hydrogen-bearing functional group-bearing compound.

13. The photocurable ink composition according to any of claims 1 to 12, further comprising a dendritic polymer.

14. An ink cartridge, comprising the photocurable ink composition according to any of claims 1 to 13.

15. An inkjet recording method for performing recording in use of the photocurable ink composition according to any of claims 1 to 14.

16. A recorded matter obtained by using the photocurable ink composition according to any of claims 1 to 15.

17. An inkjet recording apparatus, comprising the ink cartridge according to claim 14.

# FIG. 1

# FIG.2

# FIG.3

**Europäisches Patentamt**
**European Patent Office**
**Office européen des brevets**

# EUROPEAN SEARCH REPORT

Application Number

EP 08 16 2076

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI Week 200757<br>Thomson Scientific, London, GB; AN 2007-592293<br>XP002509175<br>-& JP 2007 138084 A (SEIKO EPSON CORP) 7 June 2007 (2007-06-07)<br>* paragraphs [0007], [0017], [0020] *<br>WPI 2007-592293, abstract, line 8, USE<br>----- | 1-17 | INV.<br>C09D11/00 |
| A,D | JP 2004 009360 A (KONICA MINOLTA HOLDINGS INC) 15 January 2004 (2004-01-15)<br>* the whole document *<br>----- | 1-17 | |
| A,D | JP 2003 342499 A (KONICA MINOLTA HOLDINGS INC) 3 December 2003 (2003-12-03)<br>* the whole document *<br>----- | 1-17 | |

| TECHNICAL FIELDS SEARCHED (IPC) |
|---|
| C09D |

The present search report has been drawn up for all claims

| Place of search | Date of completion of the search | Examiner |
|---|---|---|
| Munich | 8 January 2009 | Jung, Andreas |

## ANNEX TO THE EUROPEAN SEARCH REPORT
## ON EUROPEAN PATENT APPLICATION NO.

EP 08 16 2076

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2009

| Patent document cited in search report | | Publication date | Patent family member(s) | Publication date |
|---|---|---|---|---|
| JP 2007138084 | A | 07-06-2007 | NONE | |
| JP 2004009360 | A | 15-01-2004 | NONE | |
| JP 2003342499 | A | 03-12-2003 | NONE | |

EPO FORM P0459

For more details about this annex : see Official Journal of the European Patent Office, No. 12/82

**EP 2 028 241 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006241194 A
- JP 2003342499 A
- JP 2004009360 A
- JP 2007182535 A
- JP 2007182536 A